# EUROPEAN PATENT APPLICATION

(11) **EP 1 475 472 A2**
(43) Date of publication of application: **10.11.2004**
(21) Application number: 04009313.0
(22) Date of filing: 20.04.2004
(51) Int. Cl.: D06F 39/08

(54) **Wash water-circulating apparatus for washing machines and method of controlling the same**

(30) Priority: 25.04.2003 KR 2003026410; 02.05.2003 KR 2003028200
(71) Applicant: LG Electronics Inc., Seoul 150-010 (KR)
(72) Inventor: Lee, Tae Hee, Wonmi-ku, Buchun-si, 420-030 Kyungki-do (KR); Hong, Sang Wook, Seoul 121-030 (KR); Choi, Byung Keol, Bupyung-ku, Inchun-si 403-023 (KR); Seo, Hyun Seok, Inchun-si 402-779 (KR); Jeon, Si Moon, Seoul 137-062 (KR)
(74) Representative: TER MEER STEINMEISTER & PARTNER GbR

(57) **Abstract**

Disclosed herein are a wash water-circulating apparatus for washing machines and a method of controlling the same. The wash water-circulating apparatus comprises a circulation channel (74) connected between one side of a tub (56) and the other side of the tub for allowing wash water to circulate therethrough, a pump assembly (70) disposed on the circulation channel (74) for forcibly circulating the wash water, and a water level sensor (72) disposed at the pump assembly (70) or on the circulation channel (74) downstream of the pump assembly for measuring the water pressure of the wash water discharged from the pump assembly. According to the present invention, the minimum amount of the wash water necessary for the pump operation is used when the washing and rinsing processes are carried out, whereby the consumed amount of the wash water is decreased, and the operational reliability of the pump is improved.

## Description

### BACKGROUND OF THE INVENTION

### Field of the Invention

The present invention relates to a washing machine, including a drum washing machine, and more particularly to a wash water-circulating apparatus for washing machines, which is capable of circulating/spraying wash water in a tub so that washing and rinsing operations are carried out. The present invention also relates to a method of controlling such a wash water-circulating apparatus for washing machines.

### Description of the Related Art

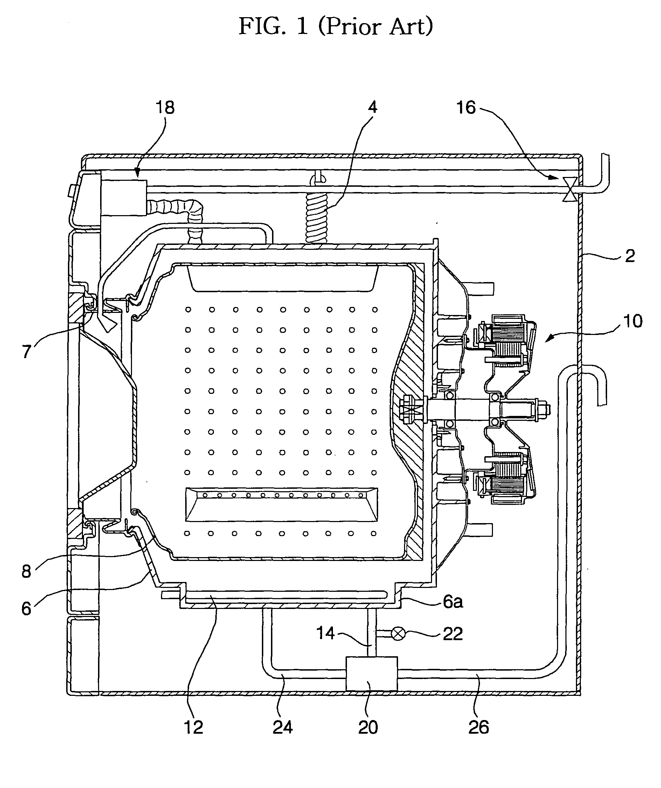

Fig. 1 is a perspective view of a conventional washing machine, especially a conventional drum washing machine.

As shown in Fig. 1, the conventional drum washing machine comprises: a casing 2 forming the exterior of the drum washing machine; a tub 6 disposed in the casing 2 in such a manner that the upper end of the tub 6 is suspended by means of a spring 4, and simultaneously the lower end of the tub 6 is supported by means of a damper assembly (not shown); a drum 8 rotatably mounted in the tub 6 for washing, rinsing and drying clothes; a motor 10 mounted at the rear of the tub 6, in such a manner that the motor 10 is connected to the drum 8, for rotating the drum 8; a heater 12 mounted to the lower part of the tub 6 for heating wash water; and a pump assembly 20 including a pump connected to the lower part of the tub 6 by means of a drainage bellows 14 for pumping wash water so that the wash water is circulated or draining the wash water to the outside.

The heater 12 is disposed between the tub 6 and the drum 8. The tub 6 includes a heater mounting part 6a formed at the lower end thereof. The heater mounting part 6a of the tub 6 is downwardly extended from the tub 6 so that the heater 12 is mounted in the heater mounting part 6a.

Above the tub 6 are mounted a water-supply valve assembly 16 for supplying wash water into the tub 6 and a detergent box assembly 18 for supplying a detergent into the tub 6.

To the drainage bellows 14 is mounted a water level sensor for detecting the water pressure of the wash water flowing to the pump assembly 20, whereby the water level of the wash water in the tub 6 is detected.

To the pump assembly 20 is connected a circulation channel 24 for circulating the wash water to the tub. To the pump assembly 20 is also connected a drainage channel 26 for draining the wash water.

The circulation channel 24 has one end connected to the pump assembly 20 and the other end disposed in a gasket 7, which is mounted between the tub 6 and the casing 2 for preventing leakage of the wash water. Specifically, the other end of the circulation channel 24 is disposed in the inner upper part of the gasket 7 so that the wash water is sprayed to the upper part of the tub 6.

When the wash water is pumped on the basis of the operating condition of the pump assembly 20, therefore, the wash water is supplied to the upper part of the tub 6 along the circulation channel 24. Consequently, the clothes are rapidly wetted, whereby the washing efficiency of the drum washing machine is improved. Furthermore, the water level of wash water to be supplied is lowered when the clothes are rinsed, whereby the amount of consumed wash water is reduced.

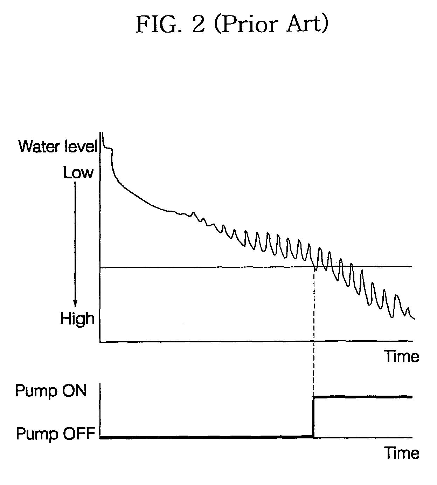

Now, a description will be given of a water level based on water-supplying time and a pump operating condition of the drum washing machine with the above-stated construction when water is supplied with reference to Fig. 2.

When the water supply valve is opened, wash water is supplied. As the wash water is supplied, the water level of the wash water in the tub 6 is gradually increased throughout the tub 6. As the motor 10 is operated, the drum 8 is rotated in the forward/reverse direction so that the clothes in the drum 8 are moved so that the clothes become wet. Consequently, the water level of the wash water is repeatedly increased/decreased.

In the case that the appropriate amount of the wash water is supplied into the tub 6, the motor 10 is operated so that the drum 8 is rotated. Consequently, a washing process is carried out. Simultaneously, the pump is operated so that the wash water at the lower part of the tub 6 is sprayed to the upper part of the tub 6. In this way, the washing operation is carried out.

When the motor 10 and the pump are operated for washing the clothes and circulating the wash water after the prescribed amount of the wash water is supplied into the tub 6, the clothes become wet. Simultaneously, the pump is operated so that the wash water is introduced into the circulation channel 24. As a result, the wash water in the tub 6 is considerably decreased.

However, when the wash water is not sufficiently supplied to the tub 6 in the conventional drum washing machine as described above, and therefore when wash water in the tub is insufficient in the course of a re-circulation washing process using the circulation channel, air may be introduced into the pump along with the wash water. As a result, the wash water re-circulation washing process is not normally carried out.

Although the water level sensor 22 is disposed on the inlet channel of the pump, the water level of the wash water in the tub is not exactly detected when the wash water re-circulation washing process is carried out since the moved amount of the wash water is increased. Consequently, it is required that an excessive amount of wash water be supplied so that the heater 12 is always operated while being submerged under the wash water. Even when the rinsing process, which requires no operation of the heater, is carried out, it is required that the appropriate water level of the wash water be maintained so that the pump is normally operated. As a result, it is required that an excessive amount of the wash water be supplied considering the flow of the wash water.

Consequently, the washing process is carried out while more wash water is supplied to the tub than is necessary so that the heater 12 and the pump are normally operated with the result that the consumed amount of the wash water is increased, and the consumed amount of electric energy is also increased.

### SUMMARY OF THE INVENTION

Therefore, the present invention has been made in view of the above problems, and it is an object of the present invention to provide a wash water-circulating apparatus for washing machines, wherein a water level sensor is disposed at the outlet port of a pump to exactly determine whether the pump is normally operated or not, whereby the reliability of a wash water re-circulation washing process is improved.

It is another object of the present invention to provide a method of controlling the above-mentioned wash water-circulating apparatus for washing machines.

It is another object of the present invention to provide a wash water-circulating apparatus for washing machines, wherein a water level sensor and a heater are disposed at the outlet port of a pump to carry out a washing process with the minimum amount of wash water necessary for normal operations of the heater and the pump, whereby the consumed amount of the wash water is decreased and the consumed amount of electric energy is also decreased.

It is still another object of the present invention to provide a method of controlling the above-mentioned wash water-circulating apparatus for washing machines.

In accordance with one aspect of the present invention, the above and other objects can be accomplished by the provision of a wash water-circulating apparatus for washing machines, comprising: a circulation channel connected between one side of a tub and the other side of the tub for allowing wash water to circulate therethrough; a pump assembly disposed on the circulation channel for forcibly circulating the wash water; and a water level sensor disposed at the pump assembly or on the circulation channel downstream of the pump assembly for measuring the water pressure of the wash water discharged from the pump assembly.

Preferably, the apparatus further comprises a heater assembly disposed on the circulation channel downstream of the pump assembly for heating the circulated wash water.

The water level sensor is mounted on the circulation channel between the pump assembly and the heater assembly, at the heater assembly, or on the circulation channel downstream of the heater assembly.

Preferably, the apparatus further comprises a drainage channel connected to the pump assembly for discharging the wash water in the tub to the outside, wherein the wash water is selectively pumped to the circulation channel or to the drainage channel by means of the pump assembly.

The circulation channel has a wash water-spraying end disposed at the lower part of the tub or at the upper part of the tub so that the wash water is sprayed into the tub through the wash water-spraying end.

In accordance with another aspect of the present invention, there is provided a washing machine comprising: a tub for storing wash water; a circulation channel connected between one side of the tub and the other side of the tub for allowing the wash water to circulate into the tub therethrough so that the wash water is sprayed into the tub; a pump assembly disposed on the circulation channel for forcibly circulating the wash water; a water level sensor for measuring the water pressure of the wash water discharged from the pump assembly; and control means for controlling supply of the wash water into the tub and operation of the pump assembly on the basis of the signal from the water level sensor.

Preferably, the machine further comprises a drainage channel connected to the pump assembly for discharging the wash water in the tub to the outside, wherein the wash water is selectively pumped to the circulation channel or to the drainage channel by means of the pump assembly.

The machine may be a drum washing machine with the tub disposed approximately horizontally or an upright washing machine with the tub disposed approximately vertically.

In accordance with still another aspect of the present invention, there is provided a method of controlling wash water circulation for washing machines, comprising the steps of: re-circulating wash water supplied into a tub along a circulation channel by operating a pump; and measuring the discharging pressure of the pump while the wash water is re-circulated, and further supplying water into the tub if the discharging pressure of the pump is less than a prescribed pressure.

The pump is stopped for a prescribed period of time when the water is further supplied into the tub.

The pump is periodically stopped/operated when the water is further supplied into the tub.

The pump-stopping time is shorter than the pump-operating time.

Preferably, the method further comprises the steps of measuring the discharging pressure of the pump after the water is further supplied, and stopping supply of water if the discharging pressure of the pump is not less than a prescribed pressure.

With the wash water-circulating apparatus for washing machines as mentioned above, it is possible to detect the water pressure of the wash water discharged from the pump assembly operated when the wash water is re-circulated so that it is determined whether the pump is normally operated or not and the wash water supplied into the tub is detected. Consequently, the minimum amount of the wash water necessary for the pump operation is used when the washing and rinsing processes are carried out, whereby the consumed amount of the wash water is decreased, and the operational reliability of the pump is improved.

With the method of controlling wash water circulation for washing machines as mentioned above, the wash water is further supplied into the tub, and simultaneously the pump is repeatedly stopped for a prescribed time while the pump is operated so that air introduced into the pump is discharged, whereby the operational reliability of the pump is improved.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a side view, in cross section, of a conventional drum washing machine;
Fig. 2 is a graph illustrating a water level based on water-supplying time and a pump operating condition of the conventional drum washing machine;
Fig. 3 is a side view, in cross section, of a drum washing machine provided with a wash water-circulating apparatus according to a first preferred embodiment of the present invention;
Fig. 4 is a side view, in cross section, of a drum washing machine provided with a wash water-circulating apparatus according to a second preferred embodiment of the present invention;
Fig. 5 is a side view, in cross section, of a drum washing machine provided with a wash water-circulating apparatus according to a third preferred embodiment of the present invention;
Fig. 6 is a side view, in cross section, of a drum washing machine provided with a wash water-circulating apparatus according to a fourth preferred embodiment of the present invention;
Fig. 7 is a side view, in cross section, of a drum washing machine provided with a wash water-circulating apparatus according to a fifth preferred embodiment of the present invention;
Fig. 8 is a flow chart illustrating a method of controlling a drum washing machine provided with a wash water-circulating apparatus according to the present invention; and
Fig. 9 is a graph illustrating a water level based on water-supplying time and a pump operating condition of a drum washing machine provided with a wash water-circulating apparatus according to the present invention.

### DESCRIPTION OF THE PREFERRED EMBODIMENTS

Now, preferred embodiments of the present invention will be described in detail with reference to the accompanying drawings.

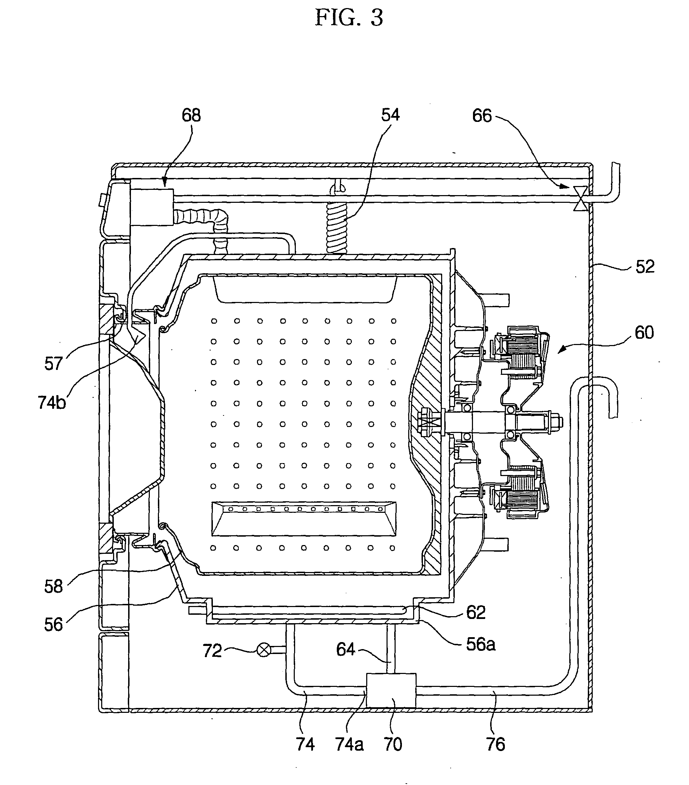

Fig. 3 is a side view, in cross section, of a drum washing machine provided with a wash water-circulating apparatus according to a first preferred embodiment of the present invention.

As shown in Fig. 3, the drum washing machine according to the first preferred embodiment of the present invention comprises: a casing 52 forming the exterior of the drum washing machine; a tub 56 disposed in the casing 52 in such a manner that the upper end of the tub 56 is suspended by means of a spring 54, and simultaneously the lower end of the tub 56 is elastically supported by means of a damper assembly (not shown); a drum 58 rotatably mounted in the tub 56 for washing, rinsing and drying clothes; a motor 60 mounted at the rear of the tub 56, in such a manner that the motor 60 is connected to the drum 58, for rotating the drum 58; a heater 62 mounted to the lower part of the tub 56 for heating wash water; and a pump assembly 70 including a pump connected to the lower part of the tub 56 by means of a drainage bellows 64 for pumping or draining the wash water; a circulation channel 74 having one end connected to the pump assembly 70 and the other end disposed in the tub 56 for spraying the wash water pumped by means of the pump assembly 70 so that the wash water is circulated to the tub 56; and a water level sensor 72 disposed on the circulation channel 74 for detecting the water level of the wash water in the tub 56 by measurement of the water pressure of the wash water discharged from the pump assembly 70.

Above the tub 56 are mounted a water-supply valve assembly 66 including a water-supply valve (not shown) for supplying wash water into the tub 56 and a detergent box assembly 68 for supplying a detergent into the tub 56.

The heater 62 is disposed in a heater mounting part 56a formed at the lower part of the tub 56. The heater mounting part 56a of the tub 56 is downwardly extended from the tub 56 so that the heater 62 is mounted in the heater mounting part 56a.

The circulation channel 74 is connected to the pump assembly 70 for pumping the wash water from the tub 56. To the pump assembly 70 is also connected a drainage channel 76 for draining the wash water from the tub 56.

One end 74a of the circulation channel 74 is connected to the pump assembly 70, and the other end 74b of the circulation channel 74 is disposed in a gasket 57, which is mounted between the front end of the tub 56 and the casing 52 for preventing leakage of the wash water. The end 74b of the circulation channel 74 is formed in the shape of a nozzle for spraying the wash water.

The water level sensor 72 is disposed on the circulation channel 74 downstream of the pump assembly 70 for measuring the water pressure of the wash water having passed through the pump. Consequently, it can be determined whether the pump is normally operated, and therefore the water level can be controlled more accurately.

When it is detected that the water pressure is lower than a prescribed pressure as air is introduced into the pump along with the wash water, the pump is not normally operated. Consequently, the water level sensor 72 determines that the appropriate amount of wash water is not supplied into the tub 56. When it is detected that the water pressure is higher than the prescribed pressure as only the wash water is introduced into the pump, the pump is normally operated. Consequently, the water level sensor 72 determines that the appropriate amount of wash water is supplied into the tub 56, and controls the operation of the water-supply valve.

In the case that the prescribed pressure of the water level sensor 72 is properly controlled, therefore, the heater 62 is submerged under the wash water in the tub 56, and the appropriate water level of the wash water necessary for normal operation of the pump is maintained, whereby the consumed amount of the wash water is decreased, and the consumed amount of electric energy is also decreased.

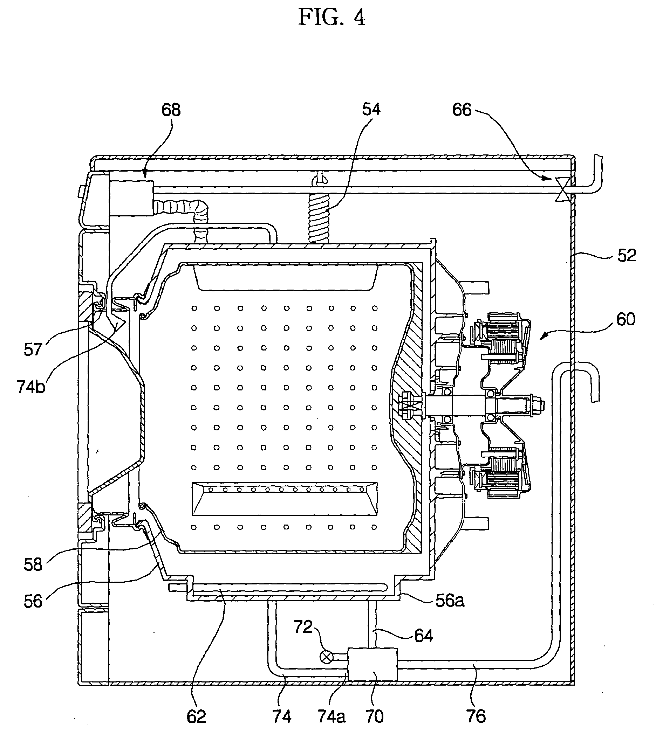

Fig. 4 is a side view, in cross section, of a drum washing machine provided with a wash water-circulating apparatus according to a second preferred embodiment of the present invention. The drum washing machine provided with the wash water-circulating apparatus according to the second preferred embodiment of the present invention is similar to the drum washing machine provided with the wash water-circulating apparatus according to the first preferred embodiment of the present invention except that the water level sensor 72 is disposed at one side of the pump assembly to detect the water pressure of the wash water discharged from the pump.

Specifically, the pump assembly 70 includes a pump case having an inlet port, through which the wash water is introduced, and an outlet port, through which the wash water is discharged. The pump is mounted in the pump case. The water level sensor 72 is mounted to one side of the pump case in such a manner that the water level sensor 72 communicates with the pump case. The water level sensor 72 determines whether the pump is operated or not and the water level of the wash water in the tub 56 by measurement of the water pressure of the wash water passing through the pump assembly 70.

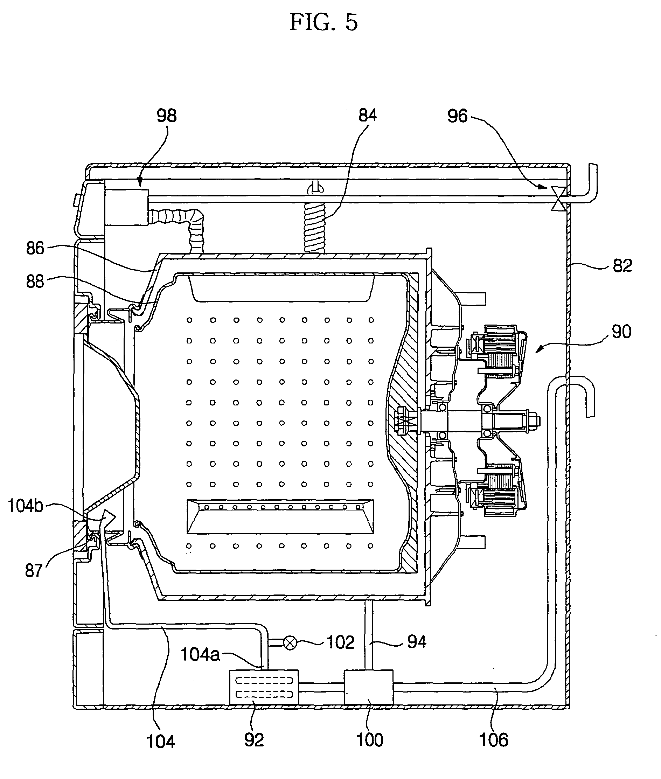

Fig. 5 is a side view, in cross section, of a drum washing machine provided with a wash water-circulating apparatus according to a third preferred embodiment of the present invention.

As shown in Fig. 5, the drum washing machine according to the third preferred embodiment of the present invention comprises: a casing 82 forming the exterior of the drum washing machine; a tub 86 disposed in the casing 82 in such a manner that the upper end of the tub 86 is suspended by means of a spring 84, and simultaneously the lower end of the tub 86 is elastically supported by means of a damper assembly (not shown); a drum 88 rotatably mounted in the tub 86 for washing, rinsing and drying clothes; a motor 90 mounted at the rear of the tub 86, in such a manner that the motor 90 is connected to the drum 88, for rotating the drum 88; a pump assembly 100 including a pump connected to the lower part of the tub 86 by means of a drainage bellows 94 for pumping or draining wash water; a circulation channel 104 having one end connected to the pump assembly 100 and the other end disposed in the tub 86 for spraying wash water pumped by means of the pump assembly 100 so that the wash water is circulated to the tub 86; a heater assembly 92 disposed on the circulation channel 104 for heating wash water; and a water level sensor 102 disposed on the circulation channel 104 for detecting the water pressure of the wash water discharged from the heater assembly 92.

The heater assembly 92 includes a heater case having an inlet port, through which the wash water is introduced, and an outlet port, through which the wash water is discharged. In the heater case is mounted an electric heater. As the pump is operated, the wash water passes through the heater assembly 92, by which the wash water is heated.

The circulation channel 104 is connected to the pump assembly 100 for pumping the wash water from the tub 86. To the pump assembly 100 is also connected a drainage channel 106 for draining the wash water from the tub 86.

One end 104a of the circulation channel 104 is connected to the pump assembly 100 and the heater assembly 92, which are disposed below the tub 86, and the other end 104b of the circulation channel 104 is disposed in the inner lower part of the tub 86 in such a manner that the other end 104b of the circulation channel 104 is extended upward. Consequently, the circulation channel 104 is relatively shortened, whereby the flow loss is reduced, and the consumed amount of wash water is decreased.

The water level sensor 102 is disposed on the circulation channel 104 downstream of the heater assembly 92 for measuring the water pressure of wash water discharged from the pump assembly in the case that the pump is operated when water is supplied. Consequently, it is determined whether the pump is normally operated or not, and therefore the water level of the wash water in the tub 86 is detected.

The water level of the wash water in the tub 86, which is detected by means of the water level sensor 102, is the minimum water level at which the pump can be operated.

Therefore, the water level sensor 102 detects the water level of water at which the pump can be operated, and stops the operation of the water-supply valve. Consequently, the consumed amount of the wash water is decreased, and the consumed amount of electric energy necessary for operations of the pump and the heater is also decreased.

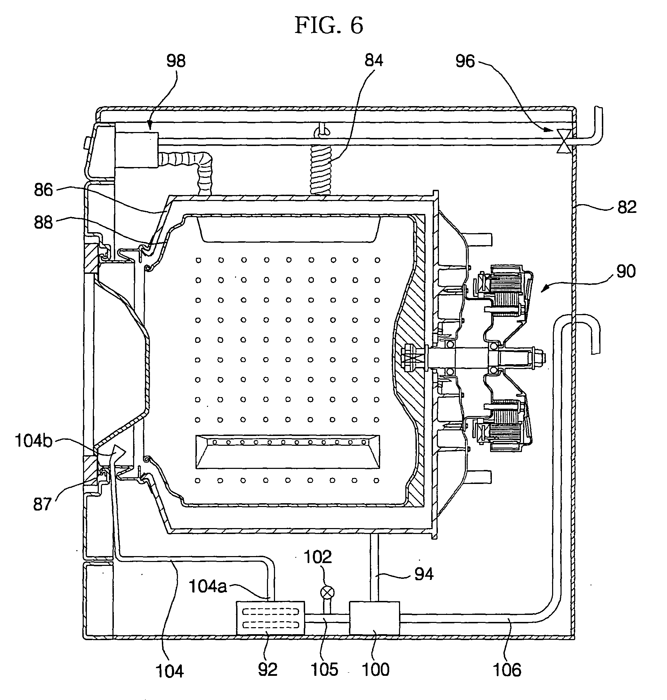

Fig. 6 is a side view, in cross section, of a drum washing machine provided with a wash water-circulating apparatus according to a fourth preferred embodiment of the present invention. The drum washing machine provided with the wash water-circulating apparatus according to the fourth preferred embodiment of the present invention is similar to the drum washing machine provided with the wash water-circulating apparatus according to the third preferred embodiment of the present invention except that the water level sensor is mounted in a different way.

Specifically, the water level sensor 102 is disposed on a connection channel 105, which is a part of the circulation channel 104 and mounted between the pump assembly 100 and the heater assembly 92, for measuring the water pressure of the wash water discharged from the pump assembly 100. Consequently, it is determined whether the pump is normally operated or not, and the water level of the wash water in the tub 86 is detected.

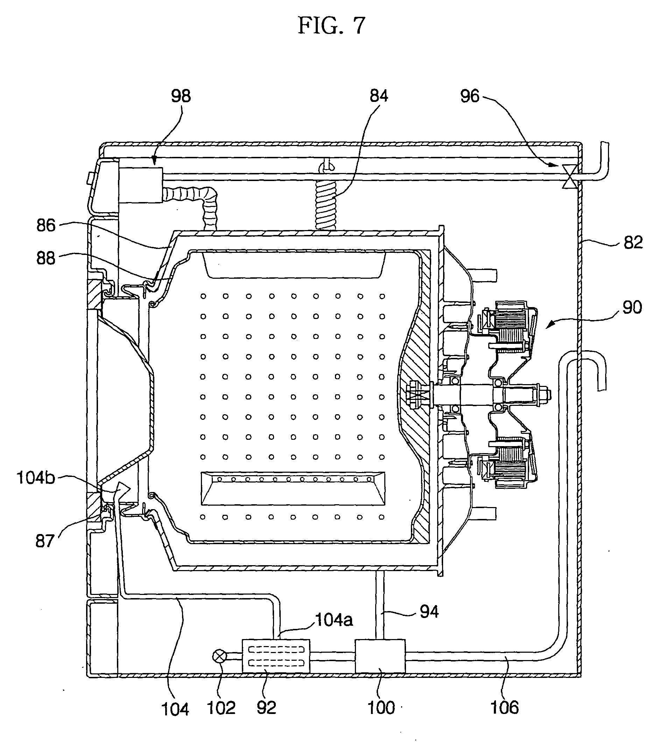

Fig. 7 is a side view, in cross section, of a drum washing machine provided with a wash water-circulating apparatus according to a fifth preferred embodiment of the present invention. The drum washing machine provided with the wash water-circulating apparatus according to the fifth preferred embodiment of the present invention is similar to the drum washing machine provided with the wash water-circulating apparatus according to the third preferred embodiment of the present invention except that the water level sensor is mounted in a different way. The water level sensor 102 is disposed at one side of the heater assembly 92 for detecting the water pressure of the wash water discharged from the pump.

Specifically, the heater assembly 92 includes a heater case having an inlet port, through which the wash water is introduced, and an outlet port, through which the wash water is discharged. The water level sensor 102 is disposed at one side of the heater case in such a manner that the water level sensor 102 communicates with the heater case for measuring the water pressure of wash water passing through the pump assembly 100 and the heater assembly 102. Consequently, it is determined whether the pump is normally operated or not, and the water level of the wash water in the tub 86 is detected.

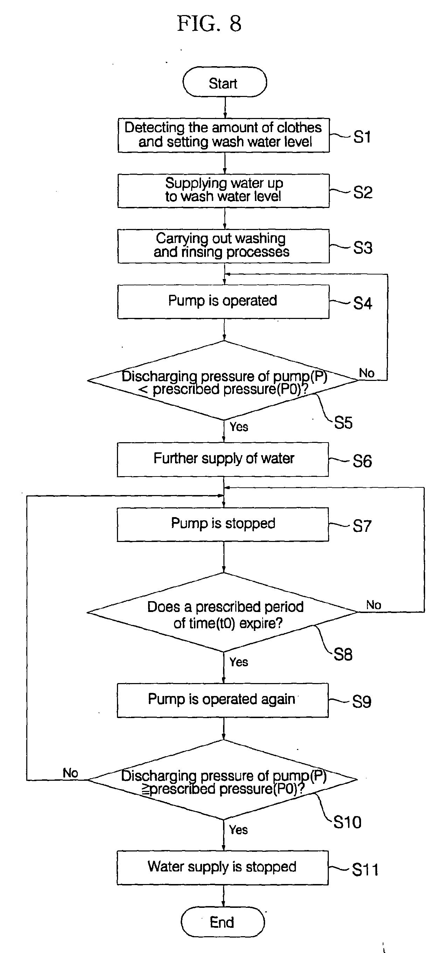

Now, a method of controlling wash water circulation for the drum washing machine with the above-stated construction will be described with reference with Figs. 7 and 8.

Fig. 8 is a flow chart illustrating a method of controlling a drum washing machine provided with a wash water-circulating apparatus according to the present invention.

When the washing or rinsing process is initiated, the amount of clothes is detected, and wash water level is set on the basis of the detected amount of the clothes, and wash water is supplied up to the wash water level (S1, S2).

The amount of the clothes is detected on the basis of the reserve power of the motor 90 or how many times the wash water is supplied while the clothes are put in the drum 88. The water-supply valve is opened for a prescribed period of time on the basis of the detected amount of the clothes so that the wash water is supplied into the tub 86.

When the wash water is supplied up to the wash water level, the washing and rinsing processes are carried out, and simultaneously the pump is operated so that the washing and rinsing efficiencies are improved (S3, S4). As the motor 90 is operated, the drum 88 is rotated with the result that the clothes are lifted by means of vanes and then dropped. In this way, the washing and rinsing processes are carried out.

When the wash water is supplied into the tub 86 up to the minimum water level at which the pump can be operated, the pump is operated for a prescribed period of time so that the wash water in the lower part of the tub is pumped. The pumped water passes through the pump assembly 100 and the heater assembly 92, and is then sprayed into the tub 86 via the circulation channel 104 so that the clothes become wet.

The minimum water level of the wash water in the tub at which the pump can be operated is detected by means of the time for which the water-supply valve is opened.

When the discharging pressure P of the pump is less than the prescribed pressure P₀ while the pump is operated, wash water is further supplied, and simultaneously the pump is stopped (S5, S6, S7). In other words, the pump is operated when the wash water is supplied up to the wash water level. Subsequently, the wash water is circulated along the circulation channel 104 so that the wash water is sprayed to the tub 86, and thus the clothes become wet. As a result, the water level of the wash water is lower than the wash water level, whereby the washing or rinsing efficiency is deteriorated, or the water level of the wash water is lower than the minimum water level, whereby the operational reliability of the pump is deteriorated. Consequently, the wash water is further supplied for preventing the above-mentioned deterioration of the washing or rinsing efficiency and the operational reliability of the pump.

When the pump is operated again, the wash water in the lower part of the tub 86 is pumped. The pumped wash water passes through the pump assembly 100 and the heater assembly 92, and is then guided along the circulation channel 104. Consequently, the water pressure P of the wash water is measured by means of the water level sensor 102 mounted at the outlet of the heater assembly 92.

As the wash water is supplied into the tub 86 until the water level of the wash water is higher than the minimum water level at which the pump can be operated, only the wash water passes through the pump assembly 100. Consequently, the operational reliability of the pump is improved, and the.water pressure of the wash water, which is measured by means of the water level sensor 102, is also accurately measured.

As the clothes become wet in the tub 86, and simultaneously the pump is operated, the water level of the wash water in the tub 86 is lowered. For this reason, wash water is supplied while the pump is not operated for a prescribed period of time to, whereby the water level of the wash water in the tub 86 is prevented from dropping below the minimum water level at which the pump can be operated.

Even when air is introduced as the pump is operated while the wash water is supplied into the tub 86 below the minimum water level at which the pump can be operated, the pump is stopped for the prescribed period of time to so that the air introduced into the pump escapes, whereby the operational reliability of the pump is improved when the pump is operated again.

After the prescribe period of time to expires while the pump is stopped, the pump is operated again (S8, S9). When the time for which the pump is stopped is larger than the prescribed period of time to while the water is supplied through the opened water-supply valve although the pump is stopped, the pump is operated again, whereby the wash water is circulated so that the clothes become wet.

When the discharging pressure P of the pump is not less than the prescribed pressure P₀ while the pump is operated again, the supply of the wash water is stopped (S10, S11). As the clothes become wet in the tub 86, and the pump is operated, the water level of the wash water is lowered in the tub 86. When the discharging pressure P of the pump is more than the prescribed pressure P₀, it is determined that the clothes become sufficiently wet, and the wash water is supplied above the wash water level although the wash water is circulated. Consequently, further supply of wash water is stopped.

When the discharging pressure P of the pump is less than the prescribed pressure P₀, however, wash water necessary for the clothes wetting operation and the wash water circulation is supplied while the pump is stopped.

The above-mentioned steps are repeated so that the wash water is supplied into the tub 86. At this time, it is preferable that the time for which the pump is stopped is shorter than the time for which the pump is operated.

In the case that the pump is operated when the water is supplied, the water-supply valve may be closed so that the wash water pumped by means of the pump is absorbed into the clothes for a sufficient period of time.

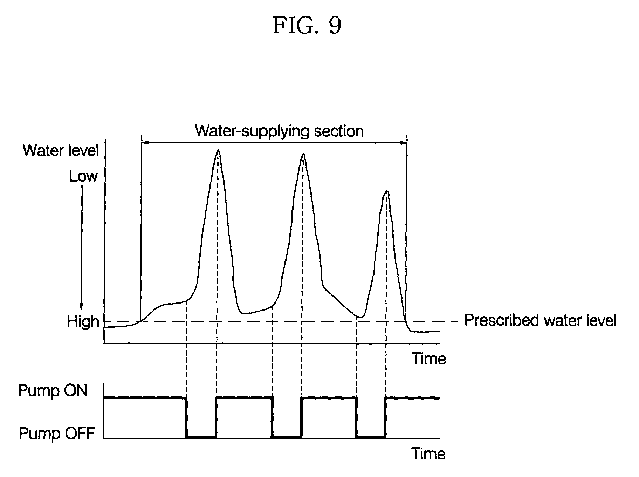

Now, a description will be given of the water level based on water-supplying time and the pump operating condition when the wash water is supplied as mentioned above. As shown in Fig. 9, the pump is operated while the water is further supplied. As a result, the water level is gradually lowered. After the pump is operated for a required period of time, the pump is stopped for the prescribed period of time t₀ so that the clothes become wet with the wash water, and the air introduced into the pump escapes.

The wash water does not pass through the pump assembly 100 and the heater assembly 92 in the section where the pump is stopped for the prescribed period of time t₀. Consequently, the water level of the wash water measured by means of the water level sensor is rapidly decreased. The wash water passes through the pump assembly 100 and the heater assembly 92 in the section where the pump is operated again. Consequently, the water level of the wash water measured by means of the water level sensor is rapidly increased.

When the water level of the wash water detected by means of the water level sensor 102 is higher than the prescribed water level after the pump is repeatedly stopped and operated again for prescribed times as described above, the motor 90 is rotated in one direction, and the pump is operated so that the washing and rinsing operations are carried out.

As apparent from the above description, the present invention provides a wash water-circulating apparatus for washing machines, which is capable of detecting the water pressure of wash water discharged from a pump assembly operated when the wash water is re-circulated so that it is determined whether a pump is normally operated or not and the wash water supplied into a tub is detected. Consequently, the minimum amount of the wash water necessary for the pump operation is used when the washing and rinsing processes are carried out, whereby the consumed amount of the wash water is decreased, and the operational reliability of the pump is improved.

According to a preferred embodiment of the present invention, a wash water circulation channel is connected to the lower part of the tub such that the wash water is sprayed at the lower part of the tub. Consequently, the total length of the circulation channel is relatively shortened, whereby the consumed amount of the wash water and the flow loss are decreased when the washing and rinsing processes are carried out, and thus the consumed amount of electric energy based on the operation of the pump is also decreased.

According to another preferred embodiment of the present invention, a heater assembly is disposed on the circulation channel. Consequently, it is not necessary to supply an excessive amount of the wash water into the tub such that the heater is submerged under the water in the tub, whereby the consumed amount of the wash water is decreased and the consumed amount of electric energy is also decreased when the clothes are washed. Furthermore, the heater is submerged under the wash water when the pump is operated. Consequently, the operational reliability of the heater is improved.

With a method of controlling wash water circulation for washing machines as mentioned above, the wash water is further supplied into the tub, and simultaneously the pump is repeatedly stopped for a prescribed time while the pump is operated so that air introduced into the pump is discharged, whereby the operational reliability of the pump is improved.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A wash water-circulating apparatus for washing machines, comprising:
a circulation channel connected between one side of a tub and the other side of the tub for allowing wash water to circulate therethrough;
a pump assembly disposed on the circulation channel for forcibly circulating the wash water; and
a water level sensor disposed at the pump assembly or on the circulation channel downstream of the pump assembly for measuring the water pressure of the wash water discharged from the pump assembly.

2. The apparatus as set forth in claim 1, further comprising a heater assembly disposed on the circulation channel downstream of the pump assembly for heating the circulated wash water.

3. The apparatus as set forth in claim 2, wherein the water level sensor is mounted on the circulation channel between the pump assembly and the heater assembly.

4. The apparatus as set forth in claim 2, wherein the water level sensor is disposed at the heater assembly.

5. The apparatus as set forth in claim 2, wherein the water level sensor is disposed on the circulation channel downstream of the heater assembly.

6. The apparatus as set forth in claim 1, further comprising a drainage channel connected to the pump assembly for discharging the wash water in the tub to the outside, wherein the wash water is selectively pumped to the circulation channel or to the drainage channel by means of the pump assembly.

7. The apparatus as set forth in claim 1, wherein the circulation channel has a wash water-spraying end disposed at the lower part of the tub so that the wash water is sprayed into the tub through the wash water-spraying end.

8. The apparatus as set forth in claim 1, wherein the circulation channel has a wash water-spraying end disposed at the upper part of the tub so that the wash water is sprayed into the tub through the wash water-spraying end.

9. A method of controlling wash water circulation for washing machines, comprising the steps of:
re-circulating wash water supplied into a tub along a circulation channel by operating a pump; and
measuring the discharging pressure of the pump while the wash water is re-circulated, and further supplying water into the tub if the discharging pressure of the pump is less than a prescribed pressure.

10. The method as set forth in claim 9, wherein the pump is stopped for a prescribed period of time when the water is further supplied into the tub.

11. The method as set forth in claim 9, wherein the pump is periodically stopped/operated when the water is further supplied into the tub.

12. The method as set forth in claim 11, wherein the pump-stopping time is shorter than the pump-operating time.

13. The method as set forth in claim 9, further comprising the steps of measuring the discharging pressure of the pump after the water is further supplied, and stopping supply of water if the discharging pressure of the pump is not less than a prescribed pressure.

14. The method as set forth in claim 13, wherein the pump is stopped for a prescribed period of time when the water is further supplied into the tub.

15. The method as set forth in claim 13, wherein the pump is periodically stopped/operated when the water is further supplied into the tub.

16. The method as set forth in claim 15, wherein the pump-stopping time is shorter than the pump-operating time.

17. A washing machine comprising:
a tub for storing wash water;
a circulation channel connected between one side of the tub and the other side of the tub for allowing the wash water to circulate into the tub therethrough so that the wash water is sprayed into the tub;
a pump assembly disposed on the circulation channel for forcibly circulating the wash water;
a water level sensor for measuring the water pressure of the wash water discharged from the pump assembly; and
control means for controlling supply of the wash water into the tub and operation of the pump assembly on the basis of the signal from the water level sensor.

18. The machine as set forth in claim 17, further comprising a drainage channel connected to the pump assembly for discharging the wash water in the tub to the outside, wherein the wash water is selectively pumped to the circulation channel or to the drainage channel by means of the pump assembly.

19. The machine as set forth in claim 17, wherein the machine is a drum washing machine with the tub disposed approximately horizontally.

20. The machine as set forth in claim 17, wherein the machine is an upright washing machine with the tub disposed approximately vertically.
